# EUROPEAN PATENT APPLICATION

(11) **EP 2 578 845 A2**
(43) Date of publication of application: **10.04.2013**
(21) Application number: 12186805.3
(22) Date of filing: 01.10.2012
(51) Int. Cl.: F02C 9/36

(54) **An oil cooling system**

(30) Priority: 07.10.2011 GB 201117289
(71) Applicant: Rolls-Royce plc, London SW1E 6AT (GB)
(72) Inventor: Rees, Paul, Derby, Derbyshire DE7 4LH (GB); Waymont, David, Loughborough, Leicestershire LE11 3PP (GB); Davies, Neil, Ashbourne, Derbyshire DE6 2DQ (GB); Holt, Jonathan, ILKESTON, DERBYSHIRE DE7 6AU (GB); Wang, Yi, Nottingham, Nottinghamshire NG9 5EN (GB)
(74) Representative: Gee, Philip David

(57) **Abstract**

A system (100) for cooling one or more circulating flows of oil (110), the system comprising: one or more fuel-oil heat exchangers (113), the fuel-oil heat exchangers using fuel for an engine (111) to cool at least one of the one or more circulating flows of oil; and a fuel return line (150) in flow communication with a point downstream of the fuel-oil heat exchangers and a point (151) upstream of the fuel-oil heat exchangers, wherein the fuel return line is arranged so that at least a portion of the fuel exiting the fuel-oil heat exchangers may be diverted to the point upstream of the fuel-oil heat exchangers. Furthermore, a system (100) for cooling a circulating flow of oil (110) may comprise one or more fuel-oil heat exchangers (113) and one or more air-fuel heat exchangers (146', 146"), the fuel-oil heat exchangers using fuel to cool the circulating flow of oil and the air-fuel heat exchangers using air to cool the fuel.

## Description

This invention relates to a cooling system and method and particularly but not exclusively relates to an oil cooling system and method for a gas turbine engine.

### Background

It is known that the rotating components of a gas turbine engine generate heat. For example, heat is generated by bearings and gears as a result of friction, windage, oil churning and the like. As a result, an engine oil system is typically provided to dissipate this heat. For example, an oil feed flow with an adequate oil temperature may cool such components. The oil may also act as a lubricant.

The resulting hot oil may be collected from various components and may be cooled via cooling devices, e.g. heat exchangers. It is known that the engine fuel flow may be used as a coolant for the hot oil. Thus cooling devices may comprise a Fuel-Oil Heat Exchanger (FOHE) and the hot oil may be cooled by the FOHE to maintain a desirable oil temperature. Alternatively or additionally, the hot oil may be cooled by air cooling via an Air-Oil Heat Exchanger (AOHE), e.g. a Surface Air-Oil Heat Exchanger (S/AOHE). The cooler sizing and cooling system arrangement forms the basis of the engine oil heat management system design.

In addition to maintaining the main engine oil temperature, there are often other heat management requirements for other units on the gas turbine engine, such as the cooling of oil used in electrical generators, for example an Integrated Drive Generator (IDG), a Variable Frequency Generator (VFG) or any other generator. Due to safety considerations, the generator oil circuits are often required to be independent of each generator and of the engine oil circuit.

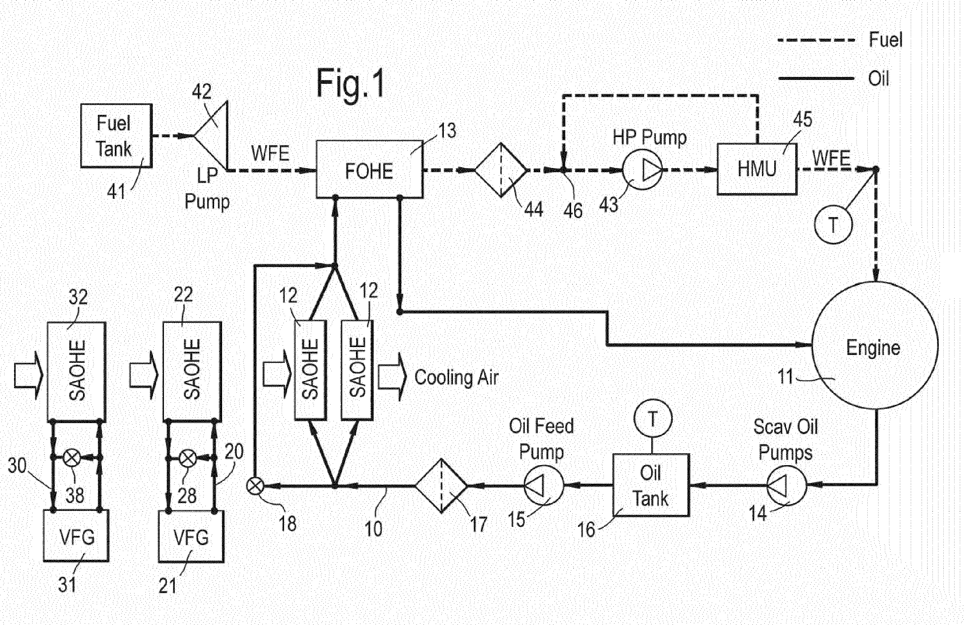

A conventional engine oil heat management system is shown in Figure 1. As is shown, there may be more than one independent oil circuit. A first oil circuit 10 may circulate around components of the engine 11 and a second oil circuit 20 may circulate around a generator 21. Additional oil circuits 30 may be provided for further generators 31. The first oil circuit 10 may comprise one or more air-oil heat exchangers 12 and a fuel-oil heat exchanger 13 arranged in flow series. Accordingly, air and fuel may cool the engine oil. As shown, the first oil circuit 10 may also comprise one or more oil pumps 14, 15, a tank 16 and a filter 17, which may also be arranged in flow series. The second and any additional oil circuits 20, 30 may also be provided with air-oil heat exchangers 22, 32 so that air may cool the generator oil. Each oil circuit 10, 20, 30 may also comprise a two-position valve 18, 28, 38 arranged to selectively bypass the respective air-oil heat exchanger 12, 22, 32.

The fuel may be pumped from a fuel tank 41 and through a fuel side of the fuel-oil heat exchanger 13 by first and second fuel pumps 42, 43. The fuel may also flow through a fuel filter 44. Selective bypass arrangements may be provided on the fuel filter 44 and on the fuel-oil heat exchanger 13, so that fuel flow is not restricted if the fuel filter or fuel-oil heat exchanger becomes obstructed, but for simplicity these are not shown in Figure 1. A fuel metering control device 45 (which may be of any type, but in this example is a hydro-mechanical unit (HMU)) may be provided to deliver the desired quantity of fuel to the engine 11. The HMU 45 may selectively divert a portion of the fuel away from the engine and to a point 46 upstream of the second fuel pump 43 and downstream of the fuel-oil heat exchanger 13.

From a thermodynamic and energy efficiency perspective, dumping waste heat from the oil into the fuel is desirable because the heat is recycled and less energy is required in the combustor to raise the temperature of the fuel. However, the heat dissipation capability of fuel depends on the fuel flow rate and the maximum fuel temperature. Modern aero-engines have high fuel burn efficiency and the fuel flow to the combustor has been significantly reduced. As a result, the fuel flow may not be sufficient for either engine or generator oil cooling. Hence the use of air cooling is needed for each of the oil circuits shown in Figure 1. However, with an air-oil heat exchanger, the heat dissipated into air is dumped overboard without recovery. Furthermore, due to the lower density and heat capacity of air, air-oil heat exchangers are larger and heavier and are thus undesirable in the case of a jet engine.

A further problem of the conventional oil heat management system shown in Figure 1 is that independent management of each oil circuit results in an inability to optimise the overall engine performance. Furthermore, the two-position valves used provide only limited control of the oil and fuel temperatures.

The present invention therefore seeks to address these issues.

### Statements of Invention

According to a first aspect of the present invention there is provided a system for cooling one or more circulating flows of oil, the system comprising: one or more fluid-oil heat exchangers, the fluid-oil heat exchangers using a fluid, e.g. fuel for an engine, to cool at least one of the one or more circulating flows of oil; and a fluid return line, e.g. a fuel return line, in flow communication with a point downstream of the fluid-oil heat exchangers and a point upstream of the fluid-oil heat exchangers, wherein the fluid return line is arranged so that at least a portion of the fluid exiting the fluid-oil heat exchangers may be diverted to the point upstream of the fluid-oil heat exchangers. In the case of the fluid being fuel, the fluid-oil heat exchangers may be fuel-oil heat exchangers.

The system may further comprise a fuel flow controller adapted to adjust the flow rate of fuel to the engine and/or fuel return line. The fuel flow controller may be downstream of the fuel-oil heat exchangers. The fuel flow controller may be adapted to selectively return the portion of the fuel exiting the fuel-oil heat exchangers to the point upstream of the fuel-oil heat exchangers via the fuel return line. The fuel flow controller may be adapted to control the flow of fuel to the engine.

The system may further comprise one or more air-fuel heat exchangers. The air-fuel heat exchangers may use air to cool the fuel. A plurality of air-fuel heat exchangers may be disposed either in a parallel or series arrangement. The air-fuel heat exchangers may be provided downstream of the fuel-oil heat exchangers.

A control means may be provided to control the extent of cooling in the fuel-oil heat exchanger and/or the extent of cooling in the air-fuel heat exchanger and thereby control the temperature of the oil and/or fuel.

The system may further comprise a first bypass line arranged in parallel with the air-fuel heat exchangers such that at least a portion of the fuel may selectively bypass the air-fuel heat exchangers. A first variable flow rate means, e.g. valve, may be provided in the first bypass line of the air-fuel heat exchangers.

The system may further comprise a second bypass line arranged in parallel with the fuel-oil heat exchangers such that at least a portion of the oil may selectively bypass the fuel-oil heat exchangers. A second variable flow rate means, e.g. valve, may be provided in the second bypass line of the fuel-oil heat exchangers.

The system may further comprise a third variable flow rate means, e.g. valve, configured to adjust the flow of fuel through the fuel-oil heat exchangers.

The one or more circulating flows of oil may circulate about one or more electrical generators and/or one or more engines. For example, a first oil circuit may circulate about the engine, e.g. components of a gas turbine engine, and a second oil circuit may circulate about a generator, e.g. an electrical generator. A third oil circuit may circulate about a further generator. Further oil circuits, which may circulate around further engines, generators or other components, may also be provided. The first, second, third and any further oil circuits may be cooled by the fuel-oil heat exchangers.

The system may further comprise one or more air-oil heat exchangers. The air-oil heat exchangers may use air to cool one or more of the circulating flows of oil. A third bypass line arranged in parallel with the air-fuel heat exchangers may be provided such that at least a portion of the oil may selectively bypass the air-oil heat exchangers. A variable flow rate means, e.g. valve, may be provided in the third bypass line of the air-oil heat exchangers.

The system may further comprise an oil return line in flow communication with points upstream and downstream of an oil pump. The oil return line may be arranged so that a portion of the oil flow exiting the oil pump may be diverted to an inlet of the oil pump. The system may further comprise a variable flow rate means, e.g. valve, configured to adjust the flow of oil through the oil return line. The oil return line may be in flow communication with a point downstream of the air-oil heat exchangers.

According to a second aspect of the present invention there is provided a system for cooling a circulating flow of oil, the system comprising one or more fluid-oil heat exchangers and one or more air-fluid heat exchangers, the fluid-oil heat exchangers using a fluid, e.g. fuel for an engine, to cool the circulating flow of oil and the air-fluid heat exchangers using air to cool the fluid. In the case of the fluid being fuel, the fluid-oil heat exchangers may be fuel-oil heat exchangers and the air-fluid heat exchangers may be air-fuel heat exchangers. Other optional features of the first aspect may also apply to the second aspect system.

An engine, e.g. a gas turbine engine, may comprise the aforementioned systems for cooling a circulating flow.

According to a third aspect of the present invention there is provided a method of cooling one or more circulating flows of oil, the method comprising: using fluid, e.g. fuel for an engine, to cool at least one of the one or more circulating flows of oil with one or more fluid-oil heat exchangers; providing a fluid return line, e.g. a fuel return line, in flow communication with a point downstream of the fluid-oil heat exchangers and a point upstream of the fluid-oil heat exchangers; and diverting at least a portion of the fluid exiting the fluid-oil heat exchangers to the point upstream of the fluid-oil heat exchangers. In the case of the fluid being fuel, the fluid-oil heat exchangers may be fuel-oil heat exchangers.

The method may further comprise adjusting the flow rate of fuel to the engine with a fuel flow controller, the fuel flow controller being downstream of the one or more fuel-oil heat exchangers; and returning the portion of the fuel exiting the fuel-oil heat exchangers to the point upstream of the fuel-oil heat exchangers via the fuel return line.

According to a fourth aspect of the present invention there is provided a method of cooling one or more circulating flows of oil, the method comprising: using fluid, e.g. fuel for an engine, to cool at least one of the one or more circulating flows of oil with one or more fluid-oil heat exchangers; and using air to cool the fuel with one or more air-fluid heat exchangers. In the case of the fluid being fuel, the fluid-oil heat exchangers may be fuel-oil heat exchangers and the air-fluid heat exchangers may be air-fuel heat exchangers.

The method may further comprise controlling the extent of cooling in the fuel-oil heat exchanger and/or the extent of cooling in the air-fuel heat exchanger and thereby controlling the temperature of the oil and-or fuel.

### Brief Description of the Drawings

For a better understanding of the present invention, and to show more clearly how it may be carried into effect, reference will now be made, by way of example, to the accompanying drawings, in which:-
Figure 1 shows a prior art cooling system;
Figure 2 shows a cooling system according to a first example of the present invention; and
Figure 3 shows a cooling system according to a second example of the present invention.

### Detailed Description

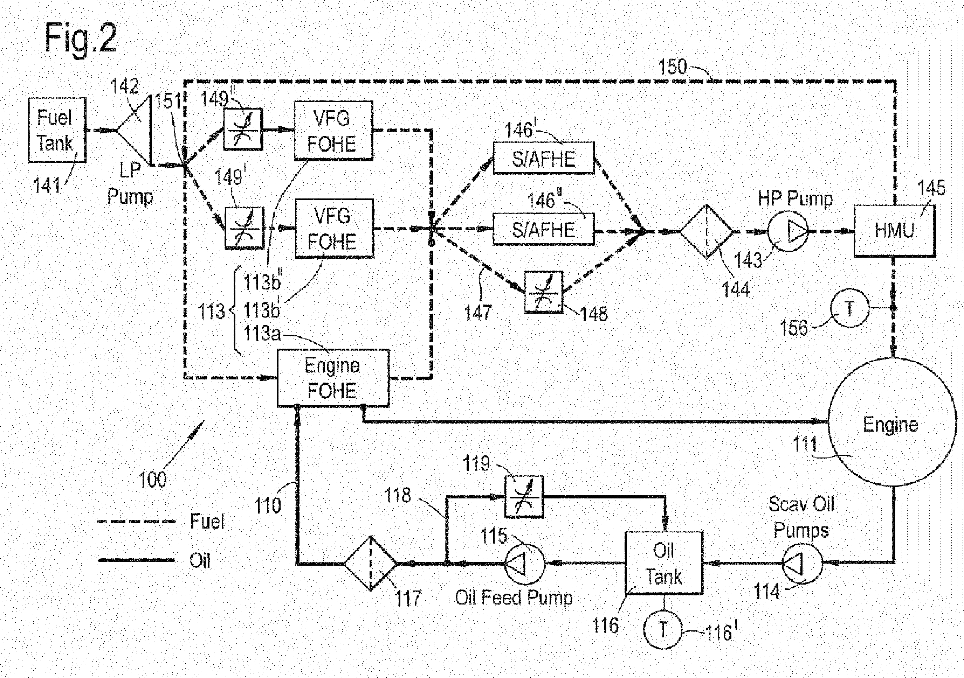

With reference to Figure 2, an oil cooling system 100 according to a first example of the present invention comprises one or more fuel-oil heat exchangers 113, the fuel-oil heat exchangers using fuel for an engine 111 to cool one or more circulating flows of oil. The circulating flows of oil may circulate about one or more oil circuits.

A first oil circuit 110 may circulate oil around components of the engine 111, e.g. for cooling and/or lubricating purposes. The first oil circuit 110 may comprise a first pump 114 (e.g. a scavenger oil pump), an oil tank 116, a second pump 115 (e.g. an oil feed pump), a filter 117 and a fuel-oil heat exchanger 113a arranged in flow series in a circuit. The oil tank 116 may comprise a temperature probe 116'. The fuel-oil heat exchanger 113a may be arranged so that oil in the first oil circuit 110 is in thermal contact with the fuel. Oil from the fuel-oil heat exchanger 113a may return to the engine 111. Accordingly, the fuel for the engine may cool the engine oil via the fuel-oil heat exchanger 113a.

The first oil circuit 110 may further comprise an oil return line 118 in flow communication with points upstream and downstream of the second pump 115. The oil return line 118 may be arranged so that a portion of the oil flow exiting the second pump 115 may be diverted to an inlet of the second pump 115, e.g. via the oil tank 116. A variable, e.g. controllable, valve 119 may be provided in the oil return line 118. The variable valve 119 may be configured to adjust the flow of oil through the oil return line 118.

Further oil circuits (not shown) may circulate around electrical generators, such as variable frequency generators (VFGs). For simplicity, these generators and their respective oil circuits are not shown in Figure 2. These further oil circuits may also comprise fuel-oil heat exchangers 113b', 113b" arranged so that oil in the further oil circuits is in thermal contact with the fuel. Thus, the fuel for the engine may cool the oil in the further oil circuits via the fuel-oil heat exchangers 113b', 113b".

The fuel may be pumped from a fuel tank 141 and through the fuel side of the fuel-oil heat exchangers 113 by first and/or second fuel pumps 142, 143, e.g. Low Pressure (LP) and High Pressure (HP) pumps. The fuel-oil heat exchangers 113 may be provided between the first and second fuel pumps 142, 143. The first and second pumps 142, 143 may be mechanical pumps, e.g. constant or variable displacement pumps, and the pumps may be driven by an electrical motor. The first and second pumps 142, 143 may provide either pump flow proportional to the driven shaft speed or variable fuel flow, as required. The fuel may also flow through a fuel filter 144, which may be provided between the first and second pumps 142, 143.

The fuel-oil heat exchangers 113 may be arranged in parallel in the fuel circuit. Heat may thus be transferred to the fuel from multiple sources and the parallel arrangement permits different fuel flow rates through each fuel-oil heat exchanger 113. Further heat generation units could be added in parallel, e.g., hydraulic system heat, Permanent Magnet Generator (PMG), if needed. Variable, e.g. controllable, valves 149', 149" may be provided in series with the fuel side of each fuel-oil heat exchanger 113. The variable valves 149', 149" may be configured to adjust the flow of fuel through the fuel-oil heat exchangers 113. For example, if the further oil circuit for a VFG is provided with a temperature sensor, the signal from that temperature sensor may be used to control the appropriate variable valve 149',149", and thereby to control the temperature of the oil flowing around the further oil circuit. Although not shown, the fuel-oil heat exchanger 113a for the first oil circuit 110 may also be provided with a variable valve in series with the fuel side of fuel-oil heat exchanger 113a.

One or more air-fuel heat exchangers 146', 146" may also be provided. The air-fuel heat exchangers may use air to cool the fuel. The air-fuel heat exchangers may be a compact matrix type heat exchanger or a surface type heat exchanger. With either type of heat exchanger, the surface area between the air and fuel flows may be optimised to maximise heat transfer therebetween. A plurality of air-fuel heat exchangers 146', 146" may be disposed either in a parallel arrangement (as shown) or a series arrangement (not shown). The air-fuel heat exchangers 146', 146" may be provided downstream of the fuel-oil heat exchangers 113. A bypass line 147 arranged in parallel with the air-fuel heat exchangers 146', 146" may also be provided such that at least a portion of the fuel may selectively bypass the air-fuel heat exchangers. A variable, e.g. controllable, valve 148 may be provided in the bypass line 147 of the air-fuel heat exchangers 146', 146".

The air-fuel heat exchangers 146', 146" may cool the fuel downstream of the fuel-oil heat exchangers to dissipate excessive heat transferred to the fuel into the air. The valve 148 in the bypass line 147 across the air-fuel heat exchangers may control the heat dissipation capability to meet the fuel and oil temperature targets (maximum and minimum).

A fuel return line 150 may be provided such that it is in flow communication with a point downstream of the fuel-oil heat exchangers 113 and a point upstream of the fuel-oil heat exchangers 113. In particular, the fuel return line 150 may be arranged so that at least a portion of the fuel exiting the fuel-oil heat exchangers 113 may be diverted to the point upstream of the fuel-oil heat exchangers. Accordingly, a portion of the fuel flow through the fuel-oil heat exchangers 113 may be re-circulated back through the fuel-oil heat exchangers, thereby providing a fuel circuit.

The fuel return line 150 may start from a point downstream of the second pump 143 and the second pump 143 may drive the fuel circuit. The operating point of the second pump 143 may be adjusted to vary the re-circulated fuel flow rate. The fuel return line 150 may start downstream of the second pump 143 or may start from the second pump 143, e.g. part way through the raising of the pressure in the second pump, e.g. to avoid high pressure in the fuel circuit. Alternatively, the second pump 143 may be divided into two pumps, with the fuel return line 150 starting between the two separated pumps.

The fuel return line 150 may return fuel to a point 151 between the first pump 142 exit and the fuel-oil heat exchangers 113, i.e. upstream of the fuel-oil heat exchangers 113. The circulating fuel may act as a medium to collect heat from the multiple heat generation sources, e.g. the engine oil circuit 110 and electrical generators. When the engine is idling, approximately 90% of the fuel flowing through the fuel-oil heat exchangers 113 may be re-circulated back to the inlet of the fuel-oil heat exchangers 113 via the fuel return line 150. Thus, the ratio of the engine fuel flow rate to the fuel return line flow rate may be 1:9. This ratio may be lower or higher when the engine is generating power and/or thrust, e.g. at take-off, cruise or landing conditions.

In an alternative arrangement, not shown in the drawings, the fuel return line 150 may return fuel to the fuel tank 141. The fuel in the fuel tank 141 would then act as a heat sink to reduce the temperature of the re-circulated fuel. In practice, such an arrangement would have to comply with certification requirements to avoid any possible contamination of the fuel, and the thermal capacity of the fuel tank would also have to be taken into account. In such an arrangement, re-circulation to the fuel tank 141 might be used only selectively, under certain engine operation conditions.

The system may further comprise a fuel flow controller, which may be of any known type but in this example is a hydro-mechanical unit (HMU) 145. The HMU 145 may be adapted to adjust the flow rate of fuel to the engine 111 and/or fuel return line 150. The HMU 145 may be downstream of the fuel-oil heat exchangers 113. The HMU may be adapted to selectively return a portion of the fuel exiting the fuel-oil heat exchangers to the point 151 upstream of the fuel-oil heat exchangers 113 via the fuel return line 150. The HMU may also be adapted to control the flow of fuel to the engine. As such, the HMU 145 may selectively divert a portion of the fuel away from the engine 111 and to the point 151 upstream of the fuel-oil heat exchangers 113.

A control means (not shown) may be provided to control the extent of cooling in the fuel-oil heat exchanger and/or the extent of cooling in the air-fuel heat exchanger and thereby control the temperature of the oil and/or fuel. For example, the control means may control one or more of: the amount of fuel diverted by the HMU 145; the amount of fuel flowing through the fuel-oil heat exchangers 113b', 113b" via valves 149', 149"; the amount of fuel flowing through the air-fuel heat exchangers 146', 146" via valve 148; the amount of oil re-circulated in the return oil line 118 via valve 119; and the pressures in the fuel circuit by varying the operating points, e.g. power, of the first and/or second pumps 142, 143. The control means may also monitor the temperature of the fuel entering the engine 111 and/or the temperature of the oil in the oil tank 116 via temperature probes 156, 116' respectively. The control means may also monitor temperatures at any other point. The control means may vary the fuel flow through each heat exchanger to adjust the heat dissipation capability to meet the oil and fuel temperature targets (both maximum and minimum).

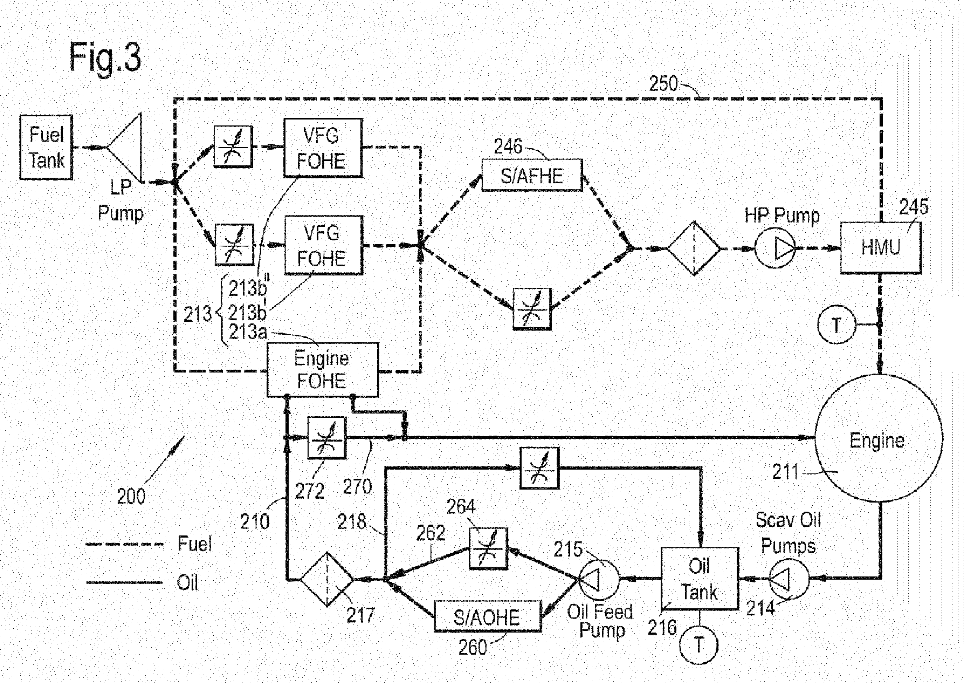

With reference to Figure 3, an oil cooling system 200 according to a second example of the present invention is substantially similar to the first example. For example, the oil cooling system 200 comprises a fuel circuit comprising one or more fuel-oil heat exchangers 213, one or more air-fuel heat exchangers 246, a fuel return line 250 and a hydro-mechanical unit (HMU) 245. The oil system 200 may also comprise a first oil circuit 210 comprising a first pump 214, an oil tank 216, a second pump 215, a filter 217 and a fuel-oil heat exchanger 213a arranged in flow series in a circuit. The fuel-oil heat exchanger 213a may be arranged so that oil in the first oil circuit 210 is in thermal contact with the fuel. The fuel circuit may provide fuel to engine 211 and the engine 211 may be lubricated and cooled by the oil in the first oil circuit 210. Additional fuel-oil heat exchangers 213b', 213b" may cool oil from other oil circuits, e.g. for electrical generators.

In contrast to the first example, the oil cooling system 200 of the second example may further comprise one or more air-oil heat exchangers 260. The air-oil heat exchangers 260 may use air to cool the oil in the first oil circuit 210. The air-oil heat exchangers 260 may be provided downstream of the second oil pump 215 and in the case of there being more than one air-oil heat exchanger, they may be disposed in a parallel or series arrangement. The air-oil heat exchangers 260 may be a compact matrix type heat exchanger or a surface type heat exchanger. With either type of heat exchanger, the surface area between the air and oil flows may be optimised to maximise heat transfer therebetween.

A bypass line 262 may be provided in parallel with the air-oil heat exchangers 260. The bypass line 262 may be provided such that at least a portion of the oil may selectively bypass the air-oil heat exchangers. A variable, e.g. controllable, valve 264 may be provided in the bypass line 262 of the air-oil heat exchangers 260. The control means may control the extent of the opening of the valve 264 to control the cooling of the oil by the air in the air-oil heat exchanger 260. As for the first example, an oil return line 218 may be provided and the oil return line 218 may be in flow communication with a point downstream of the air-oil heat exchangers 260.

The system 200 according to the second example may further comprise a further bypass line 270 arranged in parallel with the oil side of the fuel-oil heat exchanger 213a such that at least a portion of the oil may selectively bypass the fuel-oil heat exchanger 213a. A variable, e.g. controllable, valve 272 may be provided in the bypass line 270. The valve 272 in oil flow bypass line 270 may be used, e.g. by the control means, to control fuel temperature.

The additional features of the oil cooling system 200 may ease the heat dissipation duty of the fuel in the first example of the oil cooling system 100. The second example may have more flexible control over both fuel and oil temperatures.

In either the first or second example of the oil cooling system 100, 200, the fuel return line or air-fuel heat exchangers may be omitted.

The oil cooling systems 100, 200 may permit adaptive fuel flow rate control in the closed fuel circuit to proactively control oil and fuel temperatures, particularly reducing transient peak fuel and oil temperatures. Advantageously, with either example the re-circulated fuel serves as a reservoir to enable the collection of all heat inputs. The fuel return line may provide a more consistent and higher fuel flow rate through the fuel-oil heat exchangers than could be achieved with just the slow and variable flow of fuel to the engine. As a result the heat transfer rate and consistency is improved. Moreover, the liquid to liquid heat exchangers, which are used to transfer heat with the present invention, have a better heat dissipation efficiency than liquid to gas heat exchangers. By using such heat exchangers the weight, cost and installation space is thus reduced. Furthermore, a more efficient engine may result since a significant portion, if not all, of the collected heat may be dissipated into the fuel, e.g. at off-design engine operation conditions, and less heat is dumped into the airflow.

The proposed oil heat management concept options are applicable to any engine, but are particularly applicable to all aero-engines, including turbofan and turboprop engines. Although the description refers to a fuel for an engine, the present invention may also be applied to any independent fluid circuit, e.g. other than fuel. For example, the independent fluid may have a better thermal stability and tolerance of high temperatures than the fuel.

## Claims

1. A system (100, 200) for cooling one or more circulating flows of oil, the system comprising:
one or more fuel-oil heat exchangers (113, 213), the fuel-oil heat exchangers using fuel for an engine (111, 211) to cool at least one of the one or more circulating flows of oil; and
a fuel return line (150, 250) in flow communication with a point downstream of the fuel-oil heat exchangers and a point upstream of the fuel-oil heat exchangers,
wherein the fuel return line is arranged so that at least a portion of the fuel exiting the fuel-oil heat exchangers may be diverted to the point upstream of the fuel-oil heat exchangers.

2. The system of claim 1, wherein the system further comprises a fuel flow controller (145, 245) adapted to adjust the flow rate of fuel to the engine, the fuel flow controller being downstream of the fuel-oil heat exchangers; wherein the fuel flow controller is adapted to selectively return the portion of the fuel exiting the fuel-oil heat exchangers to the point upstream of the fuel-oil heat exchangers via the fuel return line.

3. The system of claim 1 or 2, wherein the system further comprises one or more air-fuel heat exchangers (146', 146", 246), the air-fuel heat exchangers using air to cool the fuel.

4. The system of claim 3, wherein the system further comprises a first bypass line (147) arranged in parallel with the air-fuel heat exchangers such that at least a portion of the fuel may selectively bypass the air-fuel heat exchangers.

5. The system of claim 4, wherein the system further comprises a first variable flow rate means (148) provided in the first bypass line of the air-fuel heat exchangers.

6. The system of any preceding claim, wherein the system further comprises a second bypass line (270) arranged in parallel with the fuel-oil heat exchangers such that at least a portion of the oil may selectively bypass the fuel-oil heat exchangers.

7. The system of claim 6, wherein the system further comprises a second variable flow rate means (272) provided in the second bypass line of the fuel-oil heat exchangers.

8. The system of any preceding claim, wherein the system further comprises one or more third variable flow rate means (149', 149") configured to adjust the flow of fuel through the fuel-oil heat exchangers.

9. The system of any preceding claim, wherein the one or more circulating flows of oil circulate about one or more electrical generators and/or one or more engines.

10. The system of any preceding claim, wherein the system further comprises one or more air-oil heat exchangers (260), the air-oil heat exchangers using air to cool one or more of the circulating flows of oil.

11. The system of any preceding claim, wherein the system further comprises an oil return line (218) in flow communication with points upstream and downstream of an oil pump (215), the oil return line being arranged so that a portion of the oil flow exiting the oil pump may be diverted to an inlet of the oil pump.

12. A system for cooling a circulating flow of oil, the system comprising one or more fuel-oil heat exchangers and one or more air-fuel heat exchangers, the fuel-oil heat exchangers using fuel to cool the circulating flow of oil and the air-fuel heat exchangers using air to cool the fuel.

13. A gas turbine engine comprising the system for cooling a circulating flow of any of the preceding claims.

14. A method of cooling one or more circulating flows of oil, the method comprising:
using fuel for an engine to cool at least one of the one or more circulating flows of oil with one or more fuel-oil heat exchangers;
providing a fuel return line in flow communication with a point downstream of the fuel-oil heat exchangers and a point upstream of the fuel-oil heat exchangers; and
diverting at least a portion of the fuel exiting the fuel-oil heat exchangers to the point upstream of the fuel-oil heat exchangers.

15. A method of cooling one or more circulating flows of oil, the method comprising:
using fuel to cool at least one of the one or more circulating flows of oil with one or more fuel-oil heat exchangers; and
using air to cool the fuel with one or more air-fuel heat exchangers.
